# EUROPEAN PATENT APPLICATION

(11) **EP 2 747 424 A1**
(43) Date of publication of application: **25.06.2014**
(21) Application number: 12198812.5
(22) Date of filing: 21.12.2012
(51) Int. Cl.: H04N 7/14, H04L 12/18, H04L 29/06, H04M 3/56, H04N 7/15, G06Q 10/10, H04N 7/18

(54) **Video transport and control in an audio conference system**

(71) Applicant: Televic Conference NV, 8870 Izegem (BE)
(72) Inventor: Melange, Cedric, 8800 Beveren (Roeselare) (BE)
(74) Representative: Van Bladel, Marc

(57) **Abstract**

The present invention relates to a system for a conference delegate comprising a delegate unit (2) containing a microphone and microphone control means arranged for controlling transport of a microphone signal over a conference system network. The system is characterised in that it further comprises video control means (2a) arranged for transmitting a control signal related to the transport of an external video signal.

## Description

### Field of the invention

The present invention is generally related to the field of audio conference systems comprising a central unit and a plurality of delegate units. More in particular, the invention relates to the field of video transport in such systems.

### Background of the invention

A conference system includes a central unit in connection with several delegate units for the participating delegates. The central unit serves to combine audio channels from various delegate units and to distribute the received audio and data channel and combinations of these channels. A delegate unit contains hardware buttons to participate in a conference (e.g. voting, microphone activation, volume control, ...). The delegate unit may further be provided with web-based graphical interface.

In current conference systems audio processing and transport is completely separated from the video processing and transport. Audio and video streams each have their own network and control.

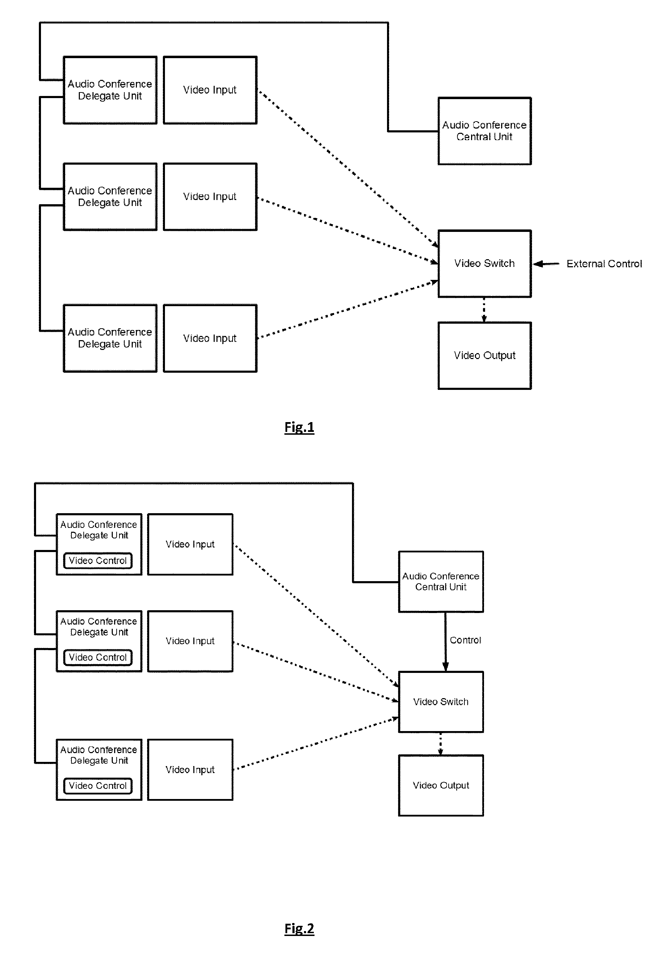

A conventional set-up is shown in Fig.1. A number of conference delegate units are shown connected to a conference central unit. Over the conference network microphone signals are transported between delegate units and central unit. Also shown is a video input block for each delegate unit. Video sharing by the delegates is enabled by a video switch that is managed by external control means. Either an operator has to operate the switch, or, in more advanced configurations, delegates can manipulate the switch themselves, but there is no link between the video installation and the audio conference system. The video part has its own control arrangement. This video switch then generates the video output in accordance with the received control signals.

Hence, there is a need for a solution wherein the separate treatment of audio and video streams is removed, or, in other words, wherein there is more integration between audio and video. More specifically, there is a need for more integration between audio and video when it comes to sharing a computer presentation or conducting a guided meeting, involving multimedia support for delegates, interpreters and public.

### Summary of the invention

It is an object of embodiments of the present invention to provide for a system for use by a conference delegate that allows control of an external video signal.

The above objective is accomplished by the solution according to the present invention.

In a first aspect the invention relates to a system for a conference delegate comprising a delegate unit containing a microphone and microphone control means arranged for controlling transport of a microphone signal over a conference system network. The system further comprises video control means arranged for transmitting a control signal related to the transport of an external video signal.

Typically the conference delegate has at his/her disposal a delegate unit with microphone and microphone control means by means of which transport of the microphone signal over the conference network can be controlled. By additionally providing the delegate with means for video control the delegate is also capable of transmitting a control signal indicating he wants to distribute an external video signal, e.g. a presentation in Powerpoint.

In a preferred embodiment the video control means is integrated in the delegate unit. The delegate unit may then comprise an extra button for performing video control.

In an advantageous embodiment the conference delegate system is arranged for transporting the external video signal over the conference system network.

In another embodiment the video control means and the microphone control means are integrated.

Advantageously, the conference delegate system further comprises a video unit arranged for receiving the external video signal and for transmitting the external video signal to a central unit.

In a preferred embodiment the video unit and the video control means are integrated.

In a preferred embodiment the video unit is integrated in the delegate unit.

In another aspect the invention relates to a central unit for a conference system arranged for receiving a control signal related to the transport of an external video signal and for initiating, routing or stopping the transport of said external video signal according to the control signal.

In a preferred embodiment the central unit for a conference system is arranged for transporting the external video signal directly to a display device of another participant's delegate unit.

In another preferred embodiment the central unit is arranged for transporting said external video signal on receiving a request. Alternatively, the central unit is arranged for transporting the external video signal when the microphone is active.

In a further aspect the invention also relates to conference system comprising a plurality of systems for a conference delegate as previously described and a central unit as described.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.

Fig.1 illustrates a prior art solution with a video switch to enable video sharing by delegates.

Fig.2 illustrates an embodiment of the present invention wherein delegate units are provided with a video control means.

Fig.3 illustrates an embodiment wherein both video control signals and video streams are transported over the conference network.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

The present invention aims at enabling a delegate from a meeting or conference to share a video input (e.g. screen from laptop, smart phone, tablet, ...) with the other attendants in a structured manner, by adding video control means (e.g. button, touch screen, ...) at each delegate position and implementing a protocol to grant access to what can be described as the 'main screen'. This main screen can be seen as the video equivalent of the audio floor channel (i.e. the audio channel that is audible to all attendants in and possibly even outside the conference room) and can be outputted in different ways and at different locations (e.g. projection screen, displays at the delegate positions, displays at the interpreter locations, a display in the lounge, ...). Equivalent to mixing several microphone signals to the audio floor channel, the 'main screen' can comprise several sub-screens, where the video signals from different delegates can be displayed, each on a separate sub-screen.
The present invention further discloses a central unit for such a conference or meeting capable of receiving a video control signal and of acting with respect to the external video signal transport according to the processed video control signals.

In the configuration shown in Fig.2 an embodiment of the invention is illustrated. The conventional microphone and microphone controller that controls the microphone signal transport over the conference system network are not shown in the delegate units depicted in the figure. The various delegate units are provided with what is indicated in the figure as a 'video control' (2a), i.e. a video control means that allows transmitting a control signal (a video request) to the audio conference central unit. As opposed to the set-up of Fig.1, it is now the conference central unit that performs control over the external video switch.

Similar to a classic 'word request' launched by a delegate who wishes to be given the floor in an audio conference system, a delegate can now issue a video request, which is transferred over the conference network to the conference central unit. Before steering the video switch, the conference central unit processes the video requests according to some given protocol, e.g. one already commonly used in the routing of the microphone signals. Some examples of such protocols are :
- *Direct Access:* a delegate requesting a video stream transfer is immediately granted access to the main screen, only if there is a unassigned sub-screen left. Otherwise the request is denied.
- *FIFO:* if all sub-screens are occupied, the video of the first delegate that was assigned access to the main screen, is removed, thus making room for the last delegate that requested a video stream.
- *Microphone coupled:* when the delegate is granted access to the audio floor channel, he is automatically assigned a sub-screen.
- *Granted by chairman:* the chairman can manually assign sub-screens to delegates.
- *Based on agenda:* in a meeting with an agenda where the speakers and their order for intervening in the discussion on the different items are known in advance, their video stream (and their microphone) can be opened automatically if the meeting has reached the relevant agenda item.

Note that in the embodiment of Fig.2 the video control means is integrated in the delegate unit. In other embodiments this may not be the case. The video control means then may form a separate device.

In Fig.2 each conference delegate system (1) is provided with a separate video unit to which the external video signal is input. In an alternative embodiment this video unit can be integrated in the delegate unit.

An important characteristic feature of the embodiment in Fig.2 is that the video signal is still transmitted from the video input block to a central video switch, as indicated by the dashed arrows.

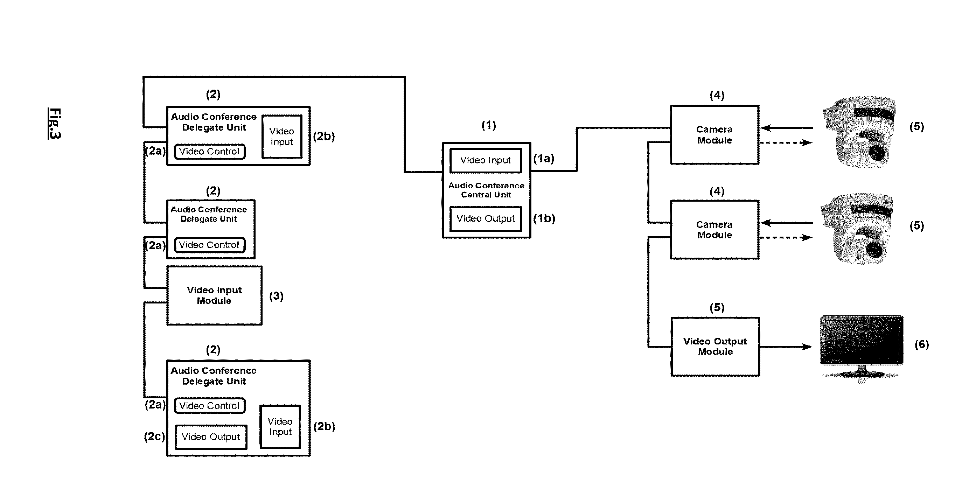

This is not the case anymore in the embodiment of Fig.3. Now the conference delegate system is so arranged that the distribution and switching of the external video signal is integrated in the conference network, i.e. in the same network used for transporting the microphone signals. Not only the video control signals are then transferred over the conference network, but also the video streams themselves. Hence, in the embodiment of Fig.3 there is no need any more for a video switch as in Fig.2. In this integrated solution the conference system acts as a distributed video switch controlled by the central unit, with numerous options to insert or retrieve video signals. A video input can be a stand-alone module (3) connected to the conference network, or can be integrated (see block 2b) in the delegate unit (2) and/or (see block 1a) in the central unit (1). The integrated option provides the most compact total solution, as no extra devices are needed to incorporate video distribution and sharing in the conference system. Similar embodiments for the video output can be used. Either stand-alone modules (5) connected to the conference network, either integrated (see block 2c) in delegate units, interpreter units or the central unit (1b) can be used. The video output can be either a screen (e.g. embedded in a unit) or a video output to connect an external screen (6).

Once the delegate has indicated he would like to share his video signal, by using interface means like a button or touch screen, the delegate unit sends a video request signal to the central unit. The central unit can either decline or accept the request, based on the selected protocol and send a reply message. When the video request was accepted, the reply message also contains a video channel number that the delegate video input module (in an advantageous embodiment integrated in the delegate unit) can use to identify its video content. On receiving this positive reply, the delegate video input module starts capturing the video that is being offered and puts it either compressed or uncompressed on the conference bus, marked with the identification number passed by the central unit. Next to a positive reply message, the central unit also configures the video output modules that will display the content of the delegate through messages that comprises the video channel that the device has to extract from the conference network. By passing video channel identifiers to both video input modules and video output modules, the central unit can route and control video transmissions over the conference network.

The description so far has been directed to video sharing from the delegate unit, but the invention goes one step further in embedding video in the conference system: camera selection and control. In an advantageous embodiment the central unit is equipped for performing these functions. Not only is the video signal transfer of the cameras handled and controlled by the conference system, the cameras are also steered (pan, tilt, zoom) by means of control signals transmitted by the central unit over the conference network. Similar as in the case of a delegate video request, several protocols related to the organization of the meeting can be applied to steer, select and allow cameras to (a 'sub-screen' of) the 'main screen'. Some examples:
- *Aim at speaker:* When a microphone is opened, the camera with the best view on that speaker is granted access to the 'main screen' and is set to optimally capture the 'talking head' of the delegate that is sitting at that microphone position.
- *Based on agenda:* If the course of the meeting is preprogrammed in a meeting agenda, the cameras can be controlled according to this script. E.g. at the start of each new item the central platform is captured, during voting an overview of the room, ...
- *Operator controlled:* based on a synoptic overview of the meeting room, an operator can manually select a camera and point to a speaker. In some cases the operator can have view of the 'program' and a 'preview' of the next view he would like to assign to the 'main screen'. The preview is also routed and controlled over the conference network.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. System for a conference delegate comprising a delegate unit (2) comprising a microphone and microphone control means arranged for controlling transport of a microphone signal over a conference system network, **characterised in that** the system further comprises video control means (2a) arranged for transmitting a control signal related to the transport of an external video signal.

2. System for a conference delegate as in claim 1, wherein said video control means (2a) is integrated in said delegate unit (2).

3. System for a conference delegate as in claim 1 or 2, arranged for transporting said external video signal over said conference system network.

4. System for a conference delegate as in any of the previous claims, wherein said video control means and said microphone control means are integrated.

5. System for a conference delegate as in any of the previous claims, further comprising a video input unit (2b,3) arranged for receiving said external video signal and for transmitting said external video signal to a central unit.

6. System for a conference delegate as in claim 5, wherein said video input unit (2b) and said video control means (2a) are integrated.

7. System for a conference delegate as in claim 5 or 6, wherein said video unit is integrated in said delegate unit.

8. Central unit (1) for a conference system arranged for receiving a control signal related to the transport of an external video signal and for handling the transport of said external video signal according to said control signal.

9. Central unit (1) for a conference system as in claim 8, arranged for transporting said external video signal directly to a display device of another participant's delegate unit.

10. Central unit (1) for a conference system as in claim 8, arranged for han dling the transport of said external video signal on receiving a grant from the conference chairman.

11. Central unit (1) for a conference system as in claim 8, arranged for handling the transport of said external video signal and of an audio signal from a delegate unit at a predefined moment in time during a conference.

12. Central unit (1) for a conference system as in claim 8, arranged for handling the transport of said external video signal when the delegate unit having transmitted said control signal has access to an audio floor channel.

13. Central unit (1) for a conference system as in any of claims 8 to 12, further arranged for performing camera control.

14. Conference system comprising a plurality of systems for a conference delegate as in any of the claims 1 to 7 and a central unit as in any of claims 8 to 13.
